# EUROPÄISCHE PATENTSCHRIFT

(11) **EP 0 940 300 B1**
(45) Veröffentlichungstag und Bekanntmachung des Hinweises auf die Patenterteilung: **21.05.2003**
(21) Anmeldenummer: 99100983.8
(22) Anmeldetag: 21.01.1999
(51) Int. Cl.: B60R 21/20

(54) **Abdeckung für eine Gassackrückhalteeinrichtung eines Kraftfahrzeuges**
Cover for vehicle airbag restraining device
Couvercle pour un système de retenue d'un véhicule

(30) Priorität: 03.03.1998 DE 19808910; 28.09.1998 DE 19844319
(43) Veröffentlichungstag der Anmeldung: 08.09.1999
(73) Patentinhaber: Bayerische Motoren Werke Aktiengesellschaft, 80788 München (DE)
(72) Erfinder: Stavermann, Joerg, 80331 München (DE)

(56) Entgegenhaltungen:
- EP-A- 0 722 862
- EP-A- 0 846 600
- EP-A- 0 849 125
- WO-A-98/56620
- US-A- 5 460 401
- US-A- 5 544 912

## Beschreibung

Die Erfindung betrifft eine Abdeckung für eine Gasrückhalteeinrichtung gemäß den Merkmalen des Patentanspruches 1.

EP 0846600 A1 beschreibt eine Airbagabdeckung mit einem Deckel, der nach dem Auslösen der Gassackrückhalteeinrichtung von einem Gassack zu einem Innenraum des Kraftfahrzeugs hin aufgestoßen und von mindestens einem, mit dem Deckel verbundenen Scharnierband, mindestens auf einer Teilstrecke seiner Öffnungsbewegung auf einer definierten Bewegungsbahn bezüglich des Karosseriekörpers gehalten wird, weil das Scharnierband an einer karosseriefesten Befestigungsstelle am Kraftfahrzeug und an dem Deckel angebracht ist, wobei das Scharnierband bei nicht ausgelöster Gassackrückhalteeinrichtung zwischen Gassackrückhalteeinrichtung und Deckel hindurch, zu einer Austrittsstelle oder zu einer Anbringungsstelle an dem Deckel hin verläuft, die sich, im wesentlichen in Fahrzeuglängsrichtung gesehen, an einer von einer Windschutzscheibe entfernter gelegenen Hälfte des Deckels, auf einer vom Innenraum des Kraftfahrzeugs weggerichteten Seite des Deckels befindet.

Aus der US 5 460 401 ist eine Airbagabdeckung bekannt, bei der bei einem Ausführungsbeispiel ein flexibles Scharnierband in die Airbagabdeckung eingeschäumt ist. Das Scharnierband ist also in eine elastische Schaumschicht der Airbagabdeckung integriert, die sich zwischen einer oberen bzw. unteren Deckschicht der Airbagabdeckung erstreckt.

In der DE 41 37 926 A1 wird eine Luftsackabdeckung in einer Instrumententafel beschrieben, die aus zwei Schichten besteht, wobei eine Schicht ein Abschlußelement aus einer elastomeren Schaumstoffschicht ist, das durch einen Schmelzkleber mit der anderen Schicht verbunden ist. Diese Luftsackabdeckung ist über ein bandförmiges Gelenk mit der Armaturentafel verbunden.

Eine solche Verbindung, wie in Fig. 2 und Fig. 3 von DE 41 37 926 A1 gezeigt, über Schrauben oder Nieten, die quer zur Kraftrichtung verlaufen, wenn die Luftsackabdeckung vom Luftsack aufgestoßen wird, besitzt nur eine geringe mechanische Festigkeit. Außerdem ist eine solche Luftsackabdeckung sehr schwer und unhandlich zu montieren, da sie dazu in Position gebracht werden muß und für das Werkzeug dann wenig Platz übrig bleibt. Desweiteren wird die Entfaltung des Luftsacks unter Umständen durch die Luftsackabdeckung behindert.

Aufgabe der Erfindung ist es, eine Abdeckung für eine Gasrückhalteeinrichtung eines Kraftfahrzeugs zu schaffen, die von einem Gassack zum Innenraum des Kraftfahrzeugs hin aufgestoßen und von mindestens einem Scharnierband, mindestens auf einer Teilstrecke ihrer Öffnungsbewegung auf einer definierten Bewegungsbahn gehalten wird, wobei die Verbindung der Abdeckung zum Kraftfahrzeug einfach montierbar ist, die Entfaltung des Gassacks durch die Abdeckung nicht behindert wird und die Abdeckung zuverlässig durch das mindestens eine Scharnierband gehalten wird.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Nach der Erfindung ist eine Abdeckung, für eine Gassackrückhalteeinrichtung eines Kraftfahrzeugs mit einem Karosseriekörper, mit einem Deckel, der nach dem Auslösen der Gassackrückhalteeinrichtung von einem Gassack zu einem Innenraum des Kraftfahrzeugs hin aufgestoßen und von mindestens einem, mit dem Deckel verbundenen Scharnierband, mindestens auf einer Teilstrecke seiner Öffnungsbewegung auf einer definierten Bewegungsbahn bezüglich des Karosseriekörpers gehalten wird, weil das Scharnierband an einer karosseriefesten Befestigungsstelle am Kraftfahrzeug und an dem Deckel angebracht ist, dadurch gekennzeichnet, daß das Scharnierband bei nicht ausgelöster Gassackrückhalteeinrichtung zwischen Gassackrückhalteeinrichtung und Deckel hindurch, zu einer Austrittsstelle oder zu einer Anbringungsstelle an dem Deckel hin verläuft, die sich, im wesentlichen in Fahrzeuglängsrichtung gesehen, an einer von einer Windschutzscheibe entfernter gelegenen Hälfte des Deckels, auf einer vom Innenraum des Kraftfahrzeugs weggerichteten Seite des Deckels befindet.

Das hat den Vorteil, daß das Scharnierband relativ lang ist. Deshalb kann der mit ihm verbundene Deckel bei der Montage des Scharnierbands an die karosseriefeste Befestigungsstelle an einer Stelle abgelegt werden, wo er den Monteur nicht behindert, zum Beispiel auf der Armaturentafel. Durch die größere Länge des Scharnierbands wird der Deckel durch den Gassack bei dessen Auslösung auch vollständig aus dessen Aufblähraum verdrängt. Wozu auch noch der Verlauf des Scharnierbands bei nicht ausgelöster Gassackrückhalteeinrichtung beiträgt. Befindet sich das Schamierband wenigstens teilweise zwischen Gassackrückhalteeinrichtung und Deckel, so kommt der sich aufblähende Gassack mit dem nach kurzer Zeit gespannten Scharnierband in Berührung, was die Deckelöffnungsbewegung vorteilhafterweise beschleunigt.

Die Öffnungsbewegung des Deckels verläuft, aufgrund der erfindungsgemäßen Anlenkung in Zusammenhang mit dem Aufblähverhalten des Gassacks, günstig mit einem großen Anteil an Translationsbewegung und wenig Rotation. Der Deckel wird parallelogrammartig verschoben mit der Wirkung ähnlich einer Übertotpunktkinematik.

Die Lage des Scharnierbands, wenigstens teilweise zwischen Gassackrückhalteeinrichtung und Deckel, trägt desweiteren auch noch zur einfachen Montierbarkeit des Deckels bei. Der Deckel kann einfach vom Kraftfahrzeuginnenraum her geschlossen werden, das Scharnierband befindet sich dann automatisch zwischen Gassackrückhalteeinrichtung und Deckel.

Erfindungsgemäß ist das Scharnierband formschlüssig mit dem Deckel verbunden. Eine solche Formschlußverbindung zwischen Scharnierband und Deckel hat den Vorteil, daß sehr große Kräfte auf die Abdeckung einwirken können, die dann vom Scharnierband über die Befestigungsstelle auf den Karosseriekörper übertragen werden.

Weiter besteht der Deckel aus mindestens einem formsteifen Kern und mindestens einer Polsterschicht und das Scharnierband ist mit der Abdeckung verbunden, indem es durch Ausnehmungen des Kerns hindurch geführt und von der Polsterschicht mindestens teilweise umgeben ist.

Eine solche Verbindung zwischen Kern und Scharnierband der Abdeckung hat den Vorteil, daß ihre Festigkeit, insbesondere in Zugrichtung der Scharnierbänder, besonders groß ist. Die Abdeckung wird also zuverlässig durch das Scharnierband zurückgehalten und ist trotzdem einfach aufgebaut.

Bei der Erfindung ist das Scharnierband an seinem einen Ende mit dem Kern formschlüssig verbunden und in Richtung seines anderen, außerhalb der Polsterschicht liegenden Endes, durch die Ausnehmungen des Kerns hindurch geführt. Dies wirkt sich vom Kraftverlauf besonders günstig aus.

Bei einer bevorzugten Ausführung der Erfindung ist der Deckel zum Verschließen einer Öffnung in der Armaturentafel angebracht. Die Gassackrückhalteeinrichtung besteht aus einem Gassackmodul hinter der Armaturentafel. Hier werden die oben genannten Vorteile für einen Beifahrergassack ausgenutzt. Wobei sich zusätzlich noch als vorteilhaft erweist, daß die translatorische Öffnungsbewegung begünstigt, daß der Deckel nicht mit der Windschutzscheibe in Berührung kommt und diese deshalb vor einer Zerstörung geschützt ist. Es sind aus diesem Grund zusätzlich zum Scharnierband für den Deckel auch keine Fangbänder nötig, die dessen Bewegungsweg weiter begrenzen.

Bei einer weiteren vorteilhaften Ausführung der Erfindung entsteht beim Zurückhalten der Abdeckung ein sehr günstiger Kraftverlauf, wenn mindestens zwei Scharnierbänder in im wesentlichen paralleler Anordnung zum Halten des Deckels verwendet werden. Dadurch wird der Deckel in Querrichtung des Fahrzeugs besser auf seiner Bewegungsbahn geführt und die Bruchsicherheit für die Scharnierbänder wird erhöht.

Bei einer weiteren bevorzugten Ausführung der Erfindung ist mindestens ein weiteres Scharnierband oder das Scharnierband mit seinem einen Ende an einer sich näher an der Windschutzscheibe befindenden Hälfte des Deckels, auf einer vom Innenraum des Kraftfahrzeugs weggerichteten Seite des Deckels, aus diesem hergebracht.

Durch diese Anlenkung des Deckels, mit jeweils einer Austrittsstelle eines Scharnierbancls auf der oberen und der unteren Hälfte des Deckels, verläuft dessen Öffnungsbewegung in Zusammenhang mit dem Aufblähverhalten des Gassacks noch günstiger. Der Deckel wird bei seiner Translationsbewegung noch sicherer geführt und die Rotation des Deckels noch besser unterbunden. Außerdem ist die Wirkung der Übertotpunktkinematik verstärkt.

Bei einer weiteren vorteilhaften Ausführung der Erfindung ist mindestens ein Scharnierband mit seinem einen Ende um einen Bügel herumgeschleift befestigt, wobei der Bügel mit dem Kern verbunden ist.

Ein solcher Bügel, zum Beispiel stab- oder rohrförmig ausgeführt und von unten mit dem Kern verschraubt, hat den Vorteil, daß bei folienhinterschäumten Airbagabdekkungen die Scharnierbänder nach dem Schäumprozeß montiert werden können. Dadurch treten keine Abzeichnungen an der Außenhaut auf. Des weiteren wird die Abdichtung des Schäumwerkzeugs gegen Schaumaustritt erleichtert. Außerdem könen Airbagabdeckungen hergestellt werden, bei denen die Kerne nur mit Folie.

Drei bevorzugte Ausführungsbeispiele der Erfindung sind in der nachfolgenden Beschreibung und der zugehörigen Zeichnung näher dargestellt.

Es zeigen die Figuren 1 bis 3, ein erstes Ausführungsbeispiel einer Gassackrückhalteeinrichtung, eingebaut in einer Armaturentafel eines Kraftfahrzeugs, als Teilquerschritt gezeichnet, während der Auslösung des Gassacks zu drei verschiedenen Zeitpunkten.

Figur 4 zeigt ein zweites Ausführungsbeispiel einer Gassackrückhalteeinrichtung im Querschnitt, mit zwei eingezeichneten Deckelstellungen, die während des Auslösevorgangs unter anderen vom Deckel eingenommen werden.

Die Figuren 5 bis 7, zeigen ein drittes Ausführungsbeispiel einer Gassackrückhalteeinrichtung, wiederum eingebaut in einer Armaturentafel eines Kraftfahrzeugs und als Teilquerschnitt gezeichnet, während der Auslösung des Gassacks zu drei verschiedenen Zeitpunkten.

Figur 8 zeigt einen Querschnitt eines Deckels zum Verschließen einer Öffnung in der Armaturentafel entsprechend dem dritten Ausführungsbeispiel und

Figur 9 zeigt eine Teilansicht des Deckels aus Figur 8 von unten.

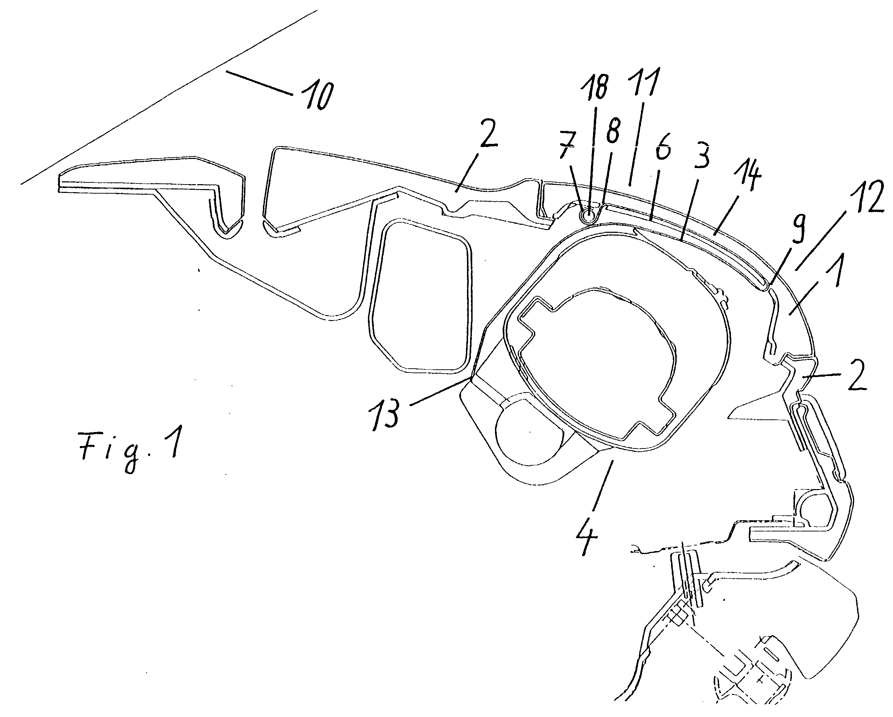

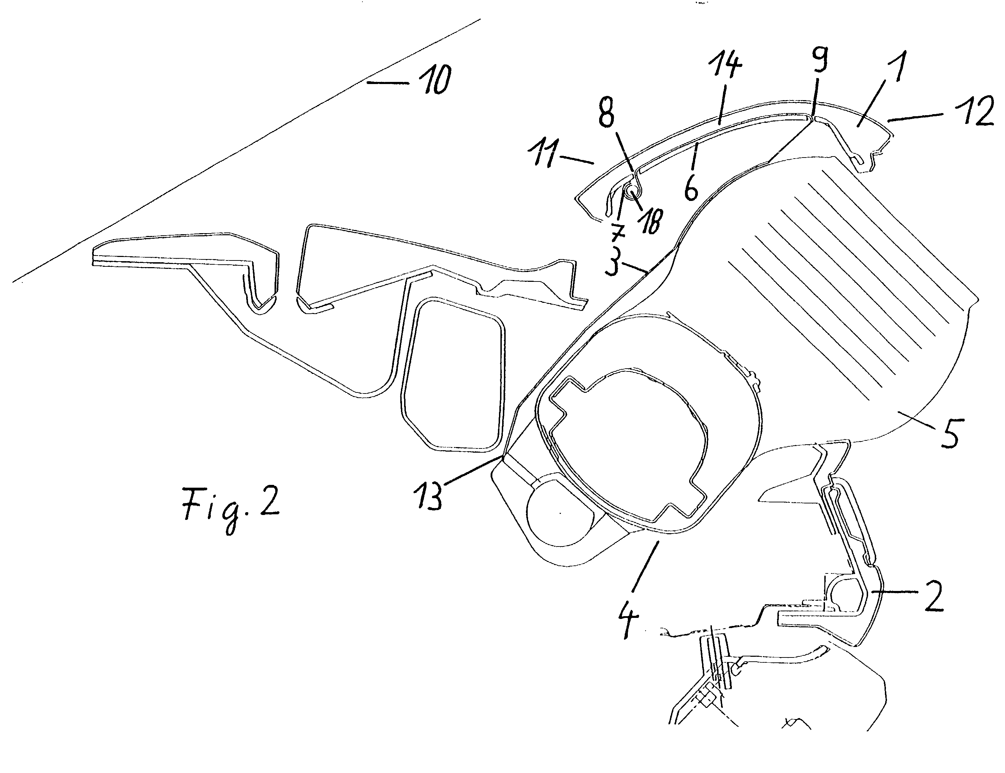

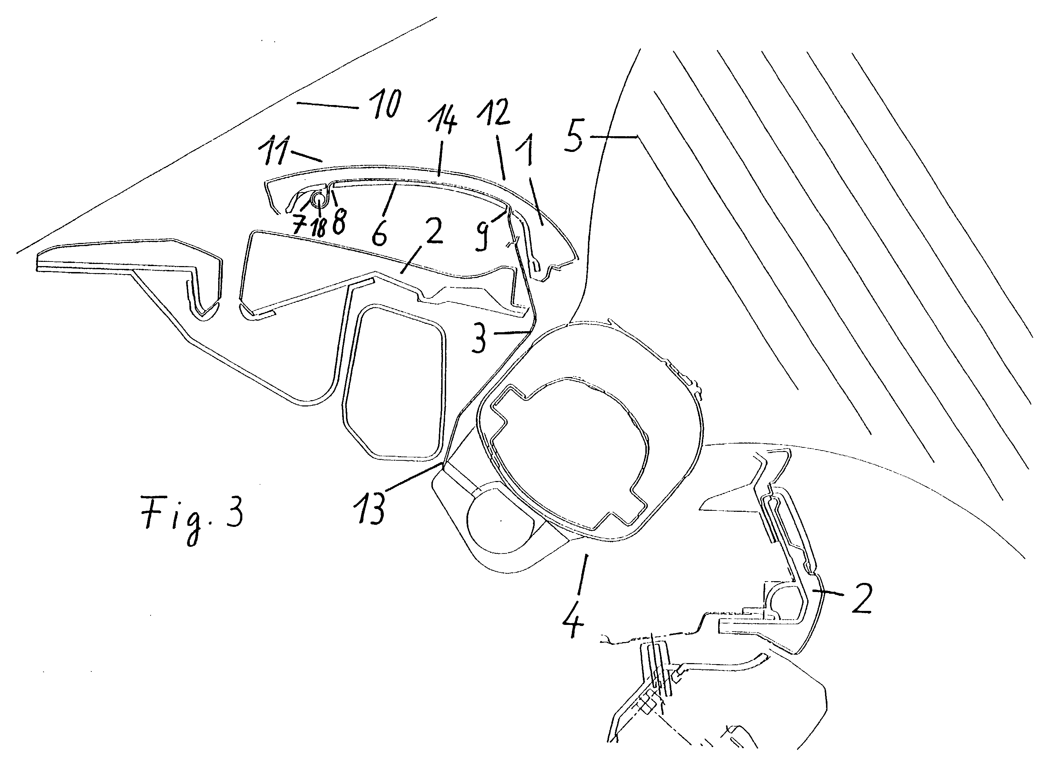

Fig. 1 zeigt einen Deckel 1 für eine Gassackrückhalteeinrichtung in einer Armaturentafel 2 eines Kraftfahrzeugs, in geschlossener Stellung, im Querschnitt. Der Dekkel 1 dient zum Verschließen einer Öffnung in der Armaturentafel 2 und wird nach dem Auslösen eines Gassackmoduls 4 von einem in den Figuren 2 und 3 gezeichneten Gassack 5 zu einem Innenraum des Kraftfahrzeugs hin aufgestoßen und von einem Schamierband 3 mindestens auf einer Teilstrecke seiner Öffnungsbewegung auf einer definierten Bewegungsbahn gehalten. Dazu ist das Scharnierband 3 mit seinem einen Ende 7 mit dem Deckel 1 verbunden und mit seinem anderen Ende 13 karosseriefest am Kraftfahrzeug festgelegt, hier am Gassackmodul 4.

Der Deckel 1 befindet sich in der Armaturentafel 2 im Bereich vor einem nicht gezeichneten Beifahrersitz, in die Armaturentafel 2 herausnehmbar eingesetzt. Das aus einem Gewebeband hergestellte Scharnierband 3 ist mit seinem einen Ende 7 formschlüssig an einem formsteifen Kern 6 angebracht, in einer Polsterschicht 14 eingebettet, die den Kern 6 zum innenraum des Kraftfahrzeugs hin umgibt. Der Kern 6 besitzt für das Scharnierband 3 zwei Ausnehmungen 8, 9 durch die dieses durchgeführt ist. Dabei ist das eine Ende 7 des Scharnierbands 3 formschlüssig an einem Bügel 18 festgelegt, der wiederum formschlüssig mit dem Kern 6 verbunden ist und zwar auf einer Hälfte 11 des Deckels 1, die näher an einer Windschutzscheibe 10 liegt. Der Bügel 18 ist an seinen beiden Enden ebenfalls durch den Kern 6 hindurchgeführt und über nicht sichtbare Vorsprünge am Kern 6 formschlüssig fixiert. Zur formschlüssigen Verbindung zwischen dem Scharnierband 3 und dem Bügel 18 ist das eine Ende 7 des Scharnierbands 3 um den Bügel 18 herumgeschleift und zu einer nicht sichtbaren Lasche vernäht.

Ausgehend von diesem einen Ende 7 des Scharnierbandes 3 verläuft dieses durch die Ausnehmung 8 in die Polsterschicht 14 des Deckels 1 hinein und weiter auf der zum Kraftfahrzeuginnenraum hin gerichteten Seite des Kerns 6, von der Polsterschicht 14 mit dem Kern 6 eingegossen, zu der nächsten Ausnehmung 9, durch diese hindurch wieder auf die Seite des Kerns 6, die zum Gassackmodul 4 hin gerichtet ist. Die Ausnehmung 9 liegt auf einer Hälfte 12 des Deckels 1, die von der Windschutzscheibe 10 weiter entfernt liegt als die Hälfte 11. Die Ausnehmung 9 ist die Austrittsstelle des Scharnierbands 3 aus dem Deckel 1. Von dort verläuft das Scharnierband 3 wieder zurück, zwischen Gassackmodul 4 und Deckel 1 hindurch, in Richtung der Windschutzscheibe 10, bis zu seiner karosseriefesten Befestigungsstelle an seinem anderen Ende 13.

In Figur 2 ist der Gassack 5 teilweise aufgebläht dargestellt. Er hat den Deckel 1 zum Innenraum des Kraftfahrzeugs hin bereits aufgestoßen und in Richtung der Windschutzscheibe 10 beschleunigt, bis das Scharnierband 3, jetzt gespannt, dessen Bewegungsbahn bezüglich des Karosseriekörpers bestimmt. Das Scharnierband 3 stützt sich am Gassack 5 ab, was zusammen mit der Lage der Austrittsstelle des Scharnierbandes 3 aus dem Deckel 1 eine parallelogrammartige Bewegungsbahn des Deckels 1 ergibt.

Figur 3 zeigt die Lage des Deckels 1 bei vollständig aufgeblähtem Gassack 5. Der Deckel 1 liegt auf der Armaturentafel 2, in gleicher Lage, nur verschoben, wie er in Figur 1 die Öffnung verschlossen hat. Die Öffnungsbewegung des Deckels 1 bestand also vorwiegend aus translatorischen Bewegungsanteilen. Diese Öffnungsbewegung verhindert auch eine Berührung zwischen Deckel 1 und Windschutzscheibe 10, die unter Umständen zur Zerstörung der Windschutzscheibe 10 führen könnte.

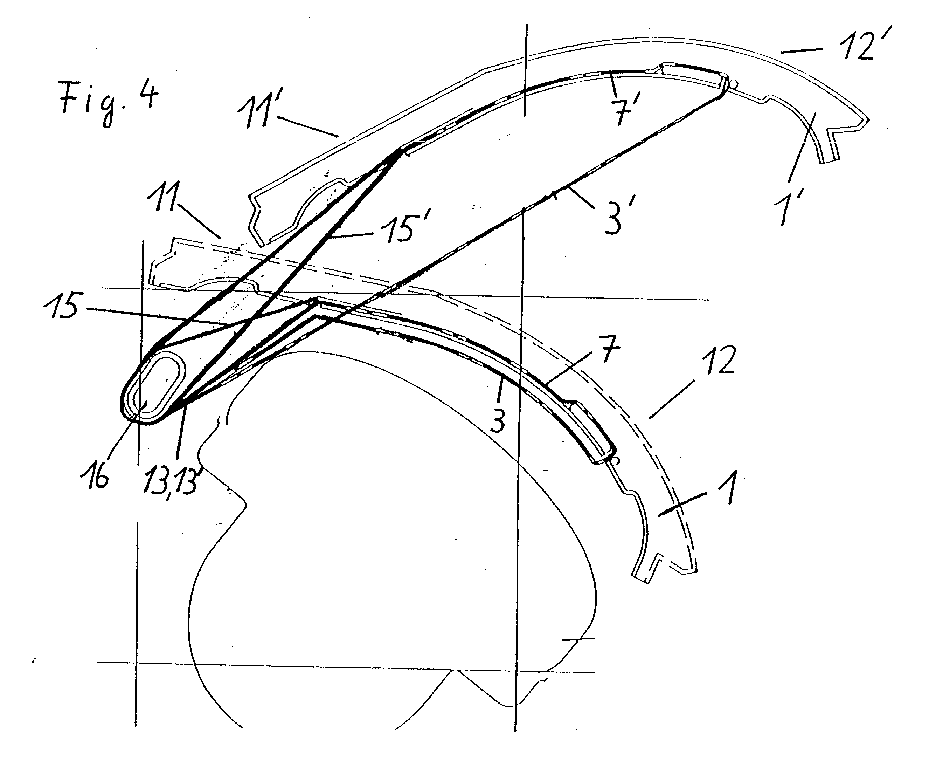

Figur 4 zeigt den Deckel 1, 1' in zwei Stellungen, einer geschlossenen, die Öffnung der hier nicht gezeichneten Armaturentafel verschließenden, und einer halb geöffneten Stellung (gleiche Bezugsziffern mit ' ). Der Gassack ist ebenfalls nicht gezeichnet. In dieser Figur soll eine Variante bezüglich der Anlenkung des Deckels 1, 1' über Scharnierbänder 3, 3' dargestellt werden. Der Deckel 1, 1' wird über das Scharnierband 3, 3' und ein weiteres Scharnierband 15, 15' auf seiner Bewegungsbahn gehalten. Das Scharnierband 3, 3', strichpunktiert gezeichnet, entspricht dem Scharnierband 3 aus den Figuren 1 bis 3, besitzt seine Austrittsstelle auf der von der hier nicht gezeichneten Windschutzscheibe entfernteren Hälfte 12, 12' des Deckels 1, 1'. Das weitere Scharnierband 15, 15' hat seine Austrittsstelle aus dem Deckel 1, 1' auf der sich näher an der Windschutzscheibe befindenden Hälfte 11, 11' des Deckels 1, 1'. Sowohl das Scharnierband 3, 3', als auch das weitere Scharnierband 15, 15' sind an der karosseriefesten Befestigungsstelle, einem Querträger 16, angebracht. Das weitere Scharnierband 15, 15' ist um diesen Querträger 16 herumgeschleift und mit seinen beiden Enden am Deckel 1, 1' befestigt, während das Scharnierband 3, 3' nur mit seinem anderen Ende 13, 13' am Querträger 16 angebracht ist.

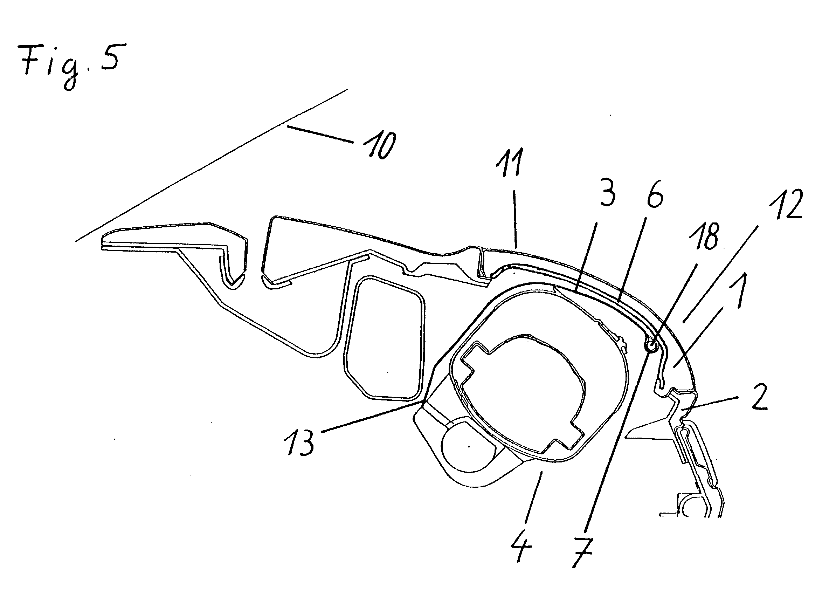

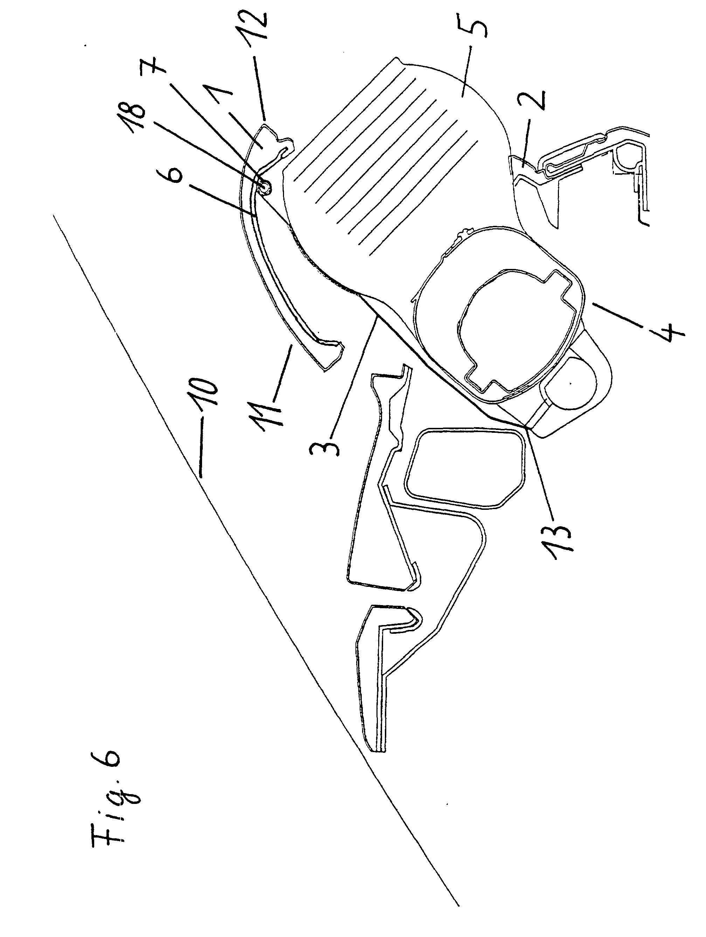

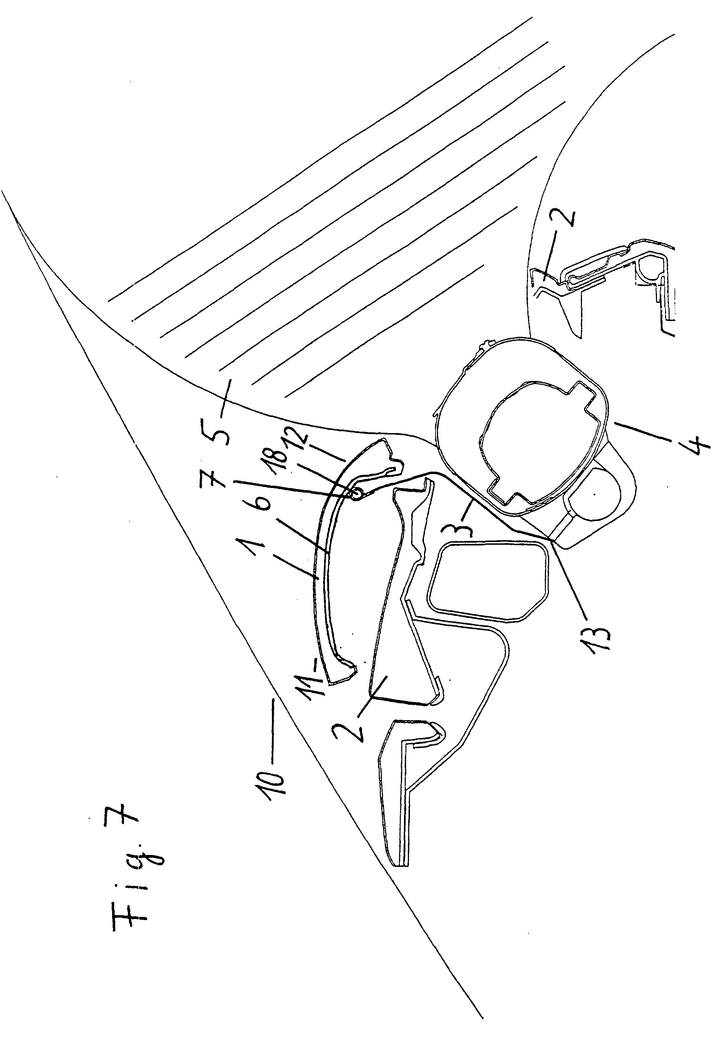

Die Figuren 5 bis 9 zeigen ein drittes Ausführungsbeispiel der Erfindung. In Figur 5 befindet sich der Deckel 1 für die Gassackrückhalteeinrichtung in der Armaturentafel 2 des Kraftfahrzeugs in geschlossener Stellung. Der Deckel 1 dient zum Verschließen der Öffnung in der Armaturentafel 2 und wird nach dem Auslösen des Gassackmoduls 4 von dem in den Figuren 6 und 7 gezeichneten Gassack 5 zu dem Innenraum des Kraftfahrzeugs hin aufgestoßen und von dem Scharnierband 3 mindestens auf einer Teilstrecke seiner Öffnungsbewegung auf einer definierten Bewegungsbahn gehalten. Dazu ist das Scharnierband 3 mit seinem einen Ende 7 mit dem Deckel 1 verbunden und mit seinem anderen Ende 13 karosseriefest am Kraftfahrzeug festgelegt, hier am Gassackmodul 4.

Der Deckel 1 befindet sich in der Armaturentafel 2 im Bereich vor dem nicht gezeichneten Beifahrersitz, in die Armaturentafel 2 herausnehmbar eingesetzt. Das aus einem Gewebeband hergestellte Scharnierband 3 ist mit seinem einen Ende 7 formschlüssig an dem Bügel 18 festgelegt, der wiederum formschlüssig mit dem Kern 6 verbunden ist und zwar bei dieser dritten Ausführungsform auf der Hälfte 12 des Deckels 1, die von der Windschutzscheibe 10 weiter entfernt liegt. Zur formschlüssigen Verbindung zwischen dem Scharnierband 3 und dem Bügel 18 ist das eine Ende 7 des Scharnierbands 3 um den Bügel 18 herumgeschleift und zu einer Lasche vernäht.

Ausgehend von dem Bügel 18, der Anbringungsstelle des einen Endes 7 des Scharnierbandes 3 am Kern 6, verläuft dieses zwischen Gassackmodul 4 und Dekkel 1 hindurch, in Richtung der Windschutzscheibe 10, bis zu seiner karosseriefesten Befestigungsstelle an seinem anderen Ende 13.

In Figur 6 ist der Gassack 5 teilweise aufgebläht dargestellt. Er hat den Deckel 1 zum Innenraum des Kraftfahrzeugs hin bereits aufgestoßen und in Richtung der Windschutzscheibe 10 beschleunigt, bis das Scharnierband 3, jetzt gespannt, dessen Bewegungsbahn bezüglich des Karosseriekörpers bestimmt. Das Scharnierband 3 stützt sich am Gassack 5 ab, was zusammen mit der Lage derAnbringungsstelle des Scharnierbandes 3 an dem Deckel 1 eine parallelogrammartige Bewegungsbahn des Deckels 1 ergibt.

Figur 7 zeigt die Lage des Deckels 1 bei vollständig aufgeblähtem Gassack 5. Der Deckel 1 liegt auf der Armaturentafel 2, in gleicher Lage, nur verschoben, wie er in Figur 1 die Öffnung verschlossen hat. Die Öffnungsbewegung des Deckels 1 bestand also vorwiegend aus translatorischen Bewegungsanteilen. Diese Öffnungsbewegung verhindert auch eine Berührung zwischen Deckel 1 und Windschutzscheibe 10, die unter Umständen zur Zerstörung der Windschutzscheibe 10 führen könnte.

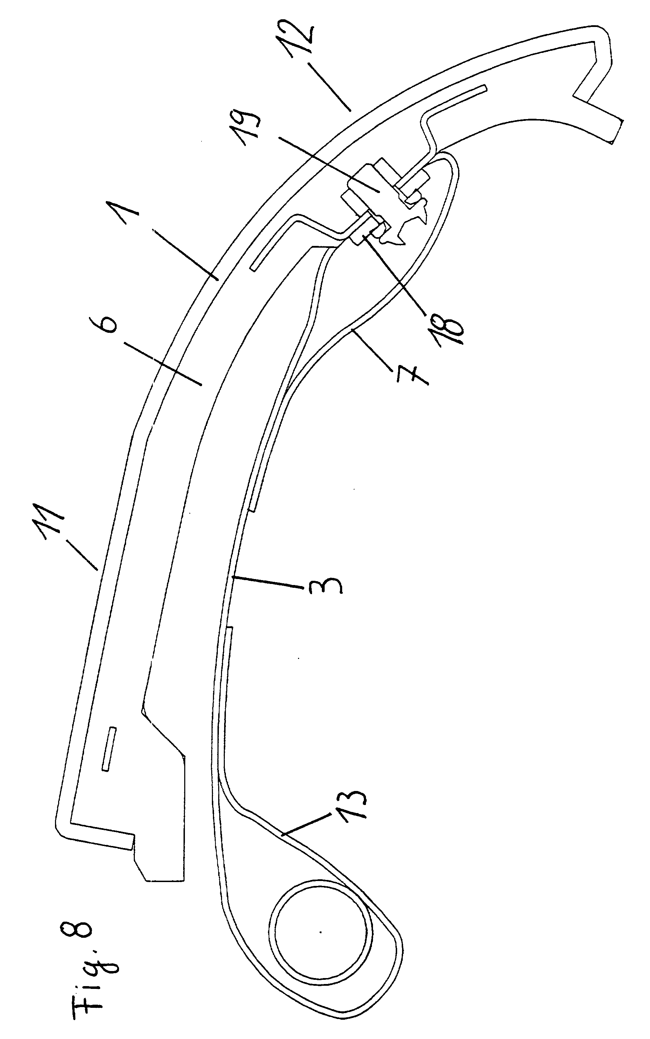

In Figur 8 ist der Deckel 1 mit dem Scharnierband 3 entsprechend dem dritten Ausführungsbeispiel nochmals genauer dargestellt. Auf der dem hier nicht gezeichneten Gassackmodul zugewandten Seite des Deckels 1 ist der Bügel 18 durch Schrauben 19 am Kern 6 befestigt. Das eine Ende 7 des Scharnierbandes 3 ist um den Bügel 18 herumgeschleift zu einer Lasche vernäht. Von hier aus verläuft das Scharnierband 3 zwischen Gassackmodul 4 und Deckel 1 hindurch, in Richtung der Windschutzscheibe 10 (Figuren 5-7), bis zu seiner karosseriefesten Befestigungsstelle an seinem anderen Ende 13, mit dem es um diese ebenfalls herumgeschleift zu einer weiteren Lasche vernäht ist.

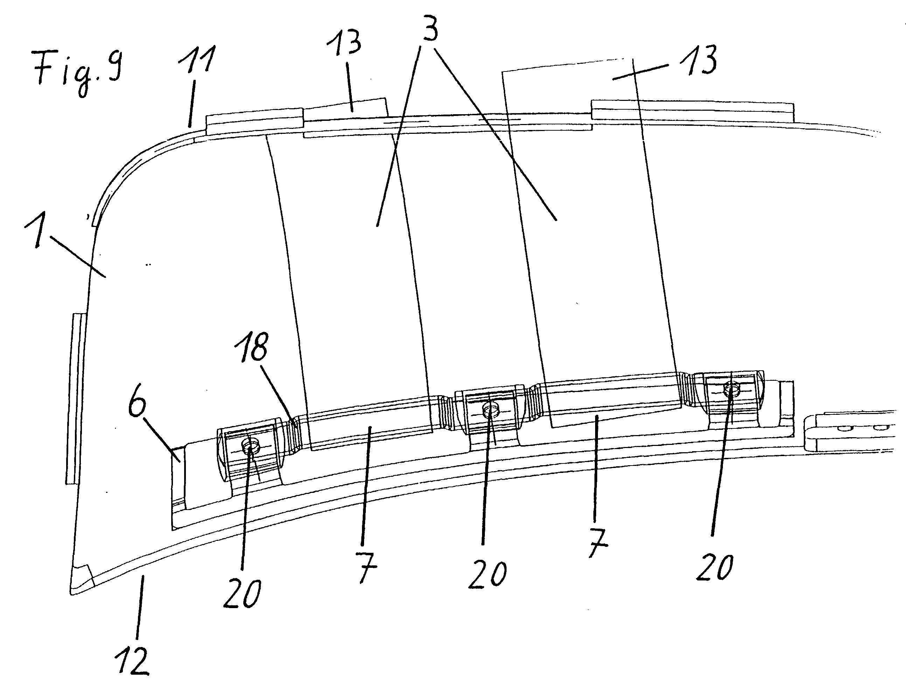

Figur 9 zeigt den Deckel 1 von unten, der dem hier nicht gezeichneten Gassackmodul 4 zugewandten Seite des Deckels 1. Der Bügel 18 ist mit drei hier nicht gezeichneten Schrauben 19 an den Befestigungsstellen 20 am Kern 6 befestigt. Zwei Scharnierbänder 3 sind, um den Bügel 18 herumgeschleift, zu je einer Lasche vernäht, an diesem befestigt. Die Befestigungsstelle des Bügels 18 am Kern 6 befindet sich auf der Hälfte 12 des Deckels 1, die von der Windschutzscheibe 10 (Figuren 5-7) weiter entfernt liegt.

## Patentansprüche

1. Abdeckung, für eine Gassackrückhalteeinrichtung eines Kraftfahrzeugs mit einem Karosseriekörper, mit einem Deckel (1, 1'), der nach dem Auslösen der Gassackrückhalteeinrichtung von einem Gassack (5) zu einem Innenraum des Kraftfahrzeugs hin aufgestoßen und von mindestens einem, mit dem Deckel (1, 1') verbundenen Scharnierband (3, 3'), mindestens auf einer Teilstrecke seiner Öffnungsbewegung auf einer definierten Bewegungsbahn bezüglich des Karoseriekörpers gehalten wird, weil das Scharnierband (3, 3') an einer karosseriefesten Befestigungsstelle am Kraftfahrzeug und an dem Deckel (1, 1') angebracht ist,
wobei das Scharnierband (3, 3') bei nicht ausgelöster Gassackrückhalteeinrichtung zwischen Gassackrückhalteeinrichtung und Deckel (1, 1') hindurch, zu einer Austrittsstelle oder zu einer Anbringungsstelle an dem Deckel (1, 1') hin verläuft, die sich, im wesentlichen in Fahrzeuglängsrichtung gesehen, an einer von einer Windschutzscheibe (10) entfernter gelegenen Hälfte (12, 12') des Deckels (1, 1'), auf einer vom Innenraum des Kraftfahrzeugs weggerichteten Seite des Deckels (1, 1') befindet,
wobei das Scharnierband (3, 3') mit dem Deckel (1, 1') formschlüssig verbunden ist,
wobei der Deckel (1, 1') aus mindestens einem formsteifen Kern (6) und mindestens einer Polsterschicht (14) besteht und das Scharnierband (3, 3') mit dem Deckel (1, 1') verbunden ist, indem es durch mindestens eine Ausnehmung (8, 9) des Kerns (6) hindurch geführt und von der Polsterschicht (14) mindestens teilweise umgeben ist
und wobei das Scharnierband (3, 3') an seinem einen Ende (7, 7') mit dem Kern (6) formschlüssig verbunden ist und in Richtung seines anderen, außerhalb der Polsterschicht (14) liegenden Endes (13, 13'), durch die Ausnehmung (8, 9) des Kerns (6) hindurch geführt ist.

2. Abdeckung nach Anspruch 1,
**dadurch gekennzeichnet, dass** der Deckel (1, 1') zum Verschließen einer Öffnung in der Armaturentafel (2) angebracht ist und die Gassackrückhalteeinrichtung aus einem Gassackmodul (4) hinter der Armaturentafel (2) besteht.

3. Abdeckung nach einem der Ansprüche 1 oder 2,
**dadurch gekennzeichnet, dass** mindestens zwei Scharnierbänder (3, 3') in im wesentlichen paralleler Anordnung mit dem Deckel (1, 1') verbunden sind.

4. Abdeckung nach einem der Ansprüche 1 bis 3,
**dadurch gekennzeichnet, dass** mindestens ein weiteres Scharnierband (15, 15') oder das Scharnierband (3, 3') mit seinem einen Ende (7, 7') an einer sich näher an der Windschutzscheibe (10) befindenden Hälfte (11, 11') des Deckels (1, 1') auf einer vom Innenraum des Kraftfahrzeugs weggerichteten Seite des Deckels (1, 1') aus diesem herausgeführt und an einer karosseriefesten Befestigungsstelle am Kraftfahrzeug angebracht ist.

5. Abdeckung nach einem der Ansprüche 1 bis 4,
**dadurch gekennzeichnet, dass** mindestens ein Bügel (18) mit dem Kern (6) verbunden ist und dass an dem Bügel (18) mindestens ein Scharnierband (3, 3') mit seinem einen Ende (7, 7') befestigt ist.

## Claims

1. A cover for an airbag retaining device in a motor vehicle comprising a body part, the cover comprising a lid (1, 1') which after release of the airbag retaining device is ejected by an airbag (5) towards the interior of the vehicle and is held by at least one hinge strap (3, 3') connected to the lid (1, 1') to a defined trajectory, along at least part of its opening movement, relative to the body part, because the hinge strap (3, 3') is attached to the vehicle and to the lid (1, 1') at a place fixed to the body, wherein when the airbag retaining device is not released, the hinge strap (3, 3') runs between the retaining device and lid (1, 1') to an outlet or to a place of attachment to the lid (1, 1'), the place, regarded substantially in the longitudinal direction of the vehicle being situated on a half (12, 12') of the lid (1, 1') more remote from a windscreen (10), on a side of the lid (1, 1') extending away from the vehicle interior,
wherein the hinge strap (3, 3') is positively connected to the lid (1, 1'), wherein the lid (1, 1') comprises at least one dimensionally stable core (6) and at least one padding layer (14) and the hinge strap (3, 3') is connected to the lid (1, 1') by being guided through at least one recess (8, 9) in the core (6) and by being at least partly surrounded by the padding layer (14), and
one end (7, 7') of the hinge strap (3, 3') is positively connected to the core (6) and in the direction of its other end (13, 13') outside the padding layer (14), the hinge strap is guided through the recess (8, 9) in the core (6).

2. A cover according to claim 1,
**characterised in that** the lid (1, 1') is attached to and closes an opening in the dashboard (2) and the airbag retaining device comprises an airbag module (4) behind the dashboard (2).

3. A cover according to claim 1 or claim 2,
**characterised in that** at least two hinge straps (3, 3') in a substantially parallel arrangement are connected to the lid (1, 1').

4. A cover according to any of claims 1 to 3,
**characterised in that** one end (7, 7') of the hinge strap (3, 3') or of at least one additional hinge strap (15, 15') extends from a half (11, 11') of the lid (1, 1') nearer the windscreen (10) on a side of the lid (1, 1') extending away from the vehicle interior and is attached to the vehicle at a place secured to the body.

5. A cover according to any of claims 1 to 4,
**characterised in that** at least one curved member (18) is connected to the core (6) and one end (7, 7') of at least one hinge strap (3, 3') is fastened to the curved member (18).

## Revendications

1. Moyen de recouvrement d'une installation de protection de passager à coussin gonflable d'un véhicule automobile, ayant un corps de carrosserie, un couvercle (1, 1') expulsé après déclenchement de l'installation de protection par un coussin gonflable (5) vers l'intérieur de l'habitacle du véhicule en étant retenu par au moins un ruban-charnière (3, 3') relié au couvercle (1, 1') sur au moins une partie du trajet de son mouvement d'ouverture, suivant une trajectoire définie par rapport au corps de carrosserie, le ruban-charnière (3, 3') étant fixé à un point fixe solidaire de la carrosserie du véhicule et au couvercle (1, 1'),
dans lequel
- le ruban-charnière (3, 3'), lorsque l'installation de protection n'est pas déclenchée, passe entre l'installation de protection à coussin gonflable et le couvercle (1, 1'), jusqu'à un point de sortie ou un point de fixation au couvercle (1, 1') qui lorsqu'on regarde essentiellement dans la direction longitudinale du véhicule se trouve sur le côté du couvercle (1, 1') non tourné vers l'intérieur du véhicule, sur une moitié (12, 12') du couvercle (1, 1') éloignée du pare-brise (10),
- le ruban-charnière (3, 3') est relié par une liaison de forme au couvercle (1, 1'),
- le couvercle (1, 1') se compose d'au moins un noyau (6) de forme rigide et d'au moins une couche de rembourrage (14) et le ruban-charnière (3, 3') est relié au couvercle (1, 1') en passant à travers au moins une ouverture (8, 8') du noyau (6) et en étant au moins partiellement entouré par la couche de rembourrage (14), et
- le ruban-charnière (3, 3') est relié par une liaison de forme par son extrémité (7, 7') au noyau (6) et est guidé en direction de son autre extrémité (13, 13') à l'extérieur de la couche de rembourrage (14) à travers l'ouverture (8, 8') du noyau (6).

2. Moyen de recouvrement selon la revendication 1,
**caractérisé en ce que**
le couvercle (1, 1') est installé dans le tableau de bord (2) pour fermer une ouverture réalisée dans celui-ci et l'installation de protection à coussin gonflable se compose d'un module à coussin gonflable (4) placé derrière le tableau de bord (2).

3. Moyen de recouvrement selon l'une des revendications 1 ou 2,
**caractérisé en ce qu'**
au moins deux rubans-charnières (3, 3') sont reliés au couvercle (1, 1') suivant une disposition essentiellement parallèle.

4. Moyen de recouvrement selon l'une quelconque des revendications des revendications 1 à 3,
**caractérisé en ce qu'**
au moins un autre ruban-charnière (15, 15') ou le ruban-charnière (3, 3') sort du couvercle (1, 1') par son extrémité (7, 7') au niveau de la moitié (11, 11') du couvercle (1, 1') proche du pare-brise (10), sur le côté du couvercle (1, 1') non tourné vers l'intérieur du véhicule, pour sortir du couvercle et être fixé au véhicule en un point de fixation solidaire de la carrosserie.

5. Moyen de recouvrement selon l'une quelconque des revendications 1 à 4,
**caractérisé en ce qu'**
au moins un étrier (18) est relié au noyau (6) et au moins un ruban-charnière (3, 3') est fixé par une extrémité (7, 7') à l'étrier (18).
